# EUROPEAN PATENT APPLICATION

(11) **EP 3 398 880 A2**
(43) Date of publication of application: **07.11.2018**
(21) Application number: 18168642.9
(22) Date of filing: 23.04.2018
(51) Int. Cl.: B65D 88/12

(54) **CABINET FOR STORING GOODS**

(30) Priority: 04.05.2017 EP 17169565
(71) Applicant: ESE World B.V., 6199 AM Maastricht-Airport (NL)
(72) Inventor: Jensen, Kjeld, 8410 Rönde (DK)
(74) Representative: Müller & Schubert

(57) **Abstract**

The present invention relates a hazardous goods cabinet (10) for storing hazardous goods containers (50), said cabinet (10) comprising a cabinet housing (11) which borders an interior space (18), whereby at least one storage device (22) for storing the containers (50) is placed or formed inside the interior space (18), said storage device (22) comprising a base plate (23) for parking the containers (50), whereby for the purpose of inserting and removing containers (50) the base plate (23) of said storage device (22) comprises a first - insertion - end (24) and a second - removal - end (25), both cooperating with an insertion opening (26) and a removal opening (27), both being formed in the cabinet housing (11). The storage device (22) comprises a divider device (32), which forms a first and a second storage area for the uptake of different types of container (50a, 50b). In addition, a blocking device may be provided being capable of preventing a removal of a container (50) being parked on the base plate (23) of the storage device (22).

## Description

The present invention relates to a cabinet for storing goods. However, the present invention is not limited to the storage of specific types of goods. In particular, the present invention is directed to a cabinet for storing containers. Furthermore, the present invention is directed to a system for storing containers.

Cabinets for storing any kinds of goods are widely known in the prior art. In general, such cabinets comprise a cabinet housing, which borders an interior space. This interior space is used to store goods, containers for example. Inside the cabinet housing one or more base plates are provided on which the goods to be stored can be placed. Usually such cabinet housings are provided with one or more doors which allow the insertion of goods into the interior space as well as the removal of stored goods out of the interior space.

Such a cabinet is disclosed in DE 92 00 323 U1 for example. This known cabinet comprises a cabinet housing having a front wall, a rear wall and two side walls, which walls delimit an interior space for storing different types of goods. In order to facilitate the insertion and removal of goods the cabinet comprises a front door as well as an additional door which is provided in one of the side walls.

With regard to hazardous goods which may be stored in a cabinet it is essential to prevent that such goods can get accessed by unauthorised person when they are stored inside the cabinet. With regard to any types of goods to be stored in the cabinet it may be preferable to store different types of goods at the same time, allowing the user of the cabinet to insert goods, in particular a first type of goods, into the cabinet and to remove goods, in particular a second type of goods, from the cabinet.

It is the object of the present invention to provide a cabinet which is capable of receiving, storing and collecting goods, in particular containers for picking up hazardous goods, said cabinet being capable of simultaneously storing different types of goods, said cabinet being further capable of preventing an unauthorised removal of goods being stored inside the cabinet.

In accordance with the present invention, this object is solved according to a first aspect of the invention by the cabinet with the features according to independent claim 1, according to a second aspect of the present invention by the cabinet with the features according to independent claim 3and according to a third aspect of the present invention by the system according to independent claim 14.

Additional features and details of the present invention become apparent from the dependent claims, from the description and from the drawings.

Therein, features and details which are described in connection with one of the aspects according to the invention apply with respect to their disclosure in their entirety also to the other aspects according to the invention, so that statements made with respect to one aspect of the invention also apply to their full extent to the other aspects of the invention, and vice versa.

All different aspects of the present invention underlie the same common basic idea, that the cabinet comprises specific features which allow that different types of goods can be easily inserted into the cabinet and can be easily removed therefrom. At the same time, the cabinet comprises features which prevent any unauthorised removal of goods being stored inside the cabinet. Therefore, all different aspects of the present invention represent different embodiments for solving the same object.

According to all aspects the invention is directed to a cabinet for storing goods, in particular for temporarily storing goods. In particular a cabinet is a piece of furniture used for storing any kinds of goods. The present invention is not limited to storing any specific kinds of goods such that all kinds of goods can be stored in such a cabinet. Furthermore, different kinds and types of goods can be stored in the cabinet at the same time.

According to a preferred embodiment, the cabinet is used for storing containers, in particular for storing small containers. A container can be any kind of receptacle for holding goods. The cabinet according to the present invention is capable of storing containers of different sizes. According to a preferred embodiment, the cabinet is provided for storing different types of goods, one first type of goods being containers which are filled with goods, and one second type of goods being empty containers. The cabinet according to the present invention is provided such that a user who inserts a filled container into the cabinet can remove an empty container from the cabinet at the same time. According to a very preferred embodiment of the present invention, the cabinet is used for storing hazardous goods containers. In such a case the containers to be stored in said cabinet are filled with dangerous goods. Therefore, it is also essential that the cabinet is capable of preventing any unauthorized removal of containers from the cabinet. This goal is achieved by means of the following features of the cabinets according to the different aspects of the invention.

Pursuant to the first aspect of present invention the object is solved by a cabinet for storing goods, in particular a hazardous goods cabinet for storing hazardous goods containers, said cabinet comprising a cabinet housing which borders an interior space, whereby at least one storage device for storing the goods is placed or formed inside the interior space, said storage device comprising a base plate for parking the goods, whereby for the purpose of inserting containers into said storage device the base plate of said storage device comprises a first end being an insertion end, said first end cooperating with an insertion opening being formed in the cabinet housing.

The cabinet is characterized in that the base plate of said storage device comprises a second end being a removal end and being spaced from said first end, said second end cooperating with a removal opening being formed in the cabinet housing for the purpose of removing goods from said storage device, that the storage device comprises a divider device, in particular a divider plate or a divider face or a divider profile element, said divider device, in relation to said base plate, being movably mounted in said storage device, and that the divider device is provided in such a manner that the area between said divider device and the first end forms a first storage area for the uptake of a first type of goods and that the area between said divider device and the second end forms a second storage area for the uptake of a second type of goods.

The cabinet comprises a cabinet housing which borders an interior space. That means that the housing covers and protects the interior space. For this purpose, the cabinet housing comprises a wall or a number of wall segments, said wall or wall segments surrounding the interior space. The present invention is not limited to specific sizes and geometries and shapes of the cabinet housing. According to a preferred embodiment the cabinet has a quadrangular shape, a rectangular or square shape for example. Nevertheless, the cabinet may have a polygonal, elliptical, oval or round shape as well.

The interior space serves to receiving and storing the goods to be stored, in particular the containers to be stored.

For this purpose, the cabinet comprises at least one storage device for storing the goods, said storage device being placed or formed inside the interior space. In general, a storage device can be any kind of device which is capable of storing goods, containers for example. Therefore, the present invention is not limited to specific embodiments of such storage devices. The storage device according to the present invention can be described as a storage level or storage layer as well. The storage device comprises a base plate for parking the goods. Such a base plate, which can be a shelf for example, is formed in such a way that it is capable of storing goods which have been inserted into the cabinet.

For the purpose of inserting goods into the storage device the base plate of said storage device comprises a first end, which is the insertion end. The first end cooperates with an insertion opening being formed in the cabinet housing. This means that the first end works or acts together with the insertion opening for the purpose of inserting goods into said storage device, in particular onto the base plate of the storage device. In particular, as seen from the direction of the insertion opening into the inside of the cabinet housing, the first end of the base plate directly follows the insertion opening, in particular the plain defined or spanned by said insertion opening.

For the purpose of removing goods from the storage device, the base plate of said storage device comprises a second end being a removal end. The second end is spaced from said first end. In particular the second end is provided at the opposite end of said base plate. The second end cooperates with a removal opening being formed in the cabinet housing. This means that the second end works or acts together with the removal opening for the purpose of removing goods from said storage device, in particular from the base plate of the storage device. In particular, as seen from the direction of the removal opening into the inside of the cabinet housing, the second removal end of the base plate directly follows the removal opening, in particular the plain defined or spanned by said removal opening.

The base plate of the storage device extends between the cabinet wall or walls, whereby the insertion opening is formed at one location of the cabinet wall and the removal opening is formed at another location of the cabinet wall, both locations being provided apart from each other.. The base plate extends between the insertion opening and the removal opening as well.

The general function of such a cabinet according to the first aspect is as follows: For inserting a good, for example a container, into the cabinet the closing device, the good is inserted through the insertion opening. The good to be stored, the container for example, can be inserted and parked on the base plate of the storage device. At the removal location, which incorporates the removal opening, the stored good, the stored container for example, can be removed through the removal opening. The stored good, the stored container for example, can now be removed from the base plate of the storage device.

According to a preferred embodiment the cabinet is provided for storing filled containers and empty containers at the same time. Filled containers can be inserted via the insertion opening. Empty containers can be removed or taken from the cabinet via the removal opening.

According to the first aspect of the invention, the storage device comprises a divider device. By means of this divider device, the storage device can be used for storing different types of goods, these different types of goods being separated from each other by means of said divider device. In case that the cabinet is used for storing containers, the divider device can be used to store filled containers and empty containers at the same time. In such a case the filled containers are separated from the empty containers by means of said divider device.

In general, the divider device is a member serving as a partition element between separate spaces or areas. The divider device is provided in such a manner that the area between the divider device and the first end being the insertion end forms a first storage area for the uptake of a first type of goods, filled containers for example, and that the area between said divider device and the second end being the removal end forms a second storage area for the uptake of a different type of goods, empty containers for example.

The present invention is not limited to specific types of divider devices. For example, the divider device can be provided as a divider plate or a divider face or a divider profile element. In a preferred embodiment, the divider device is provided as a divider plate.

According to the first aspect of the invention, the divider device, in relation to said base plate, is movably mounted in said storage device. According to a preferred embodiment, the divider device can be moved into the direction of the removal opening as well as into the direction of the insertion opening. According to a preferred embodiment the divider device can be moved between said first - insertion - end and said second - removal - end. That means that the divider device can be moved between a position which is defined by the first end of the base plate or which lies in a plain extending perpendicularly from the first end of the base plate, and a position which is defined by the second end of the base plate or which lies in a plain extending perpendicular from the second end of the base plate. Preferably the divider device can be moved along the longitudinal extension of the base plate.

According to a preferred embodiment the divider device can be moved in said storage device, along the base plate for example, until it reaches the removal side of the cabinet, the removal opening in the cabinet wall or the second -removal - end of the base plate for example, and/or until it reaches the insertion side of the cabinet, the insertion opening in the cabinet wall or the first - insertion - end of the base plate for example. In such a case the divider device is stopped by the respective cabinet wall, when it reaches said cabinet wall.

According to a different embodiment, the divider device can be moved between two members of a blocking device as will be described in greater detail with regard to the second aspect of the present invention further below.

The present invention is not limited to specific embodiments, how such a movement of the divider plate can be achieved. In a preferred embodiment the storage device comprises a groove or a guiding rail for moving the divider device. In such a case the divider device is arranged at this groove or guiding rail and can be moved along the grove or guiding rail, preferably in both directions, that is in direction from the insertion opening to the removal opening, and vice versa.

The function of this divider device will now be explained by reference to a specific embodiment, in which the cabinet is used for storing filled containers as well as empty containers. At the beginning the storage device inside the cabinet housing of the cabinet is filled with empty boxes only. At this point, the divider device is located in the region or at the insertion opening formed in a wall of the cabinet housing in the region of the first - insertion - end of the base plate. When a first container gets inserted into the storage device, the divider device is moved in the direction of the removal opening formed in a wall of the cabinet housing in the region of the second - removal - end of the base plate. At the same time an empty container can be removed from the base plate of the storage device via said removal opening, being held by a retainer element which will be described further below for example. If the divider device is moved, by means of further inserting filled containers, into a position in the area of the removal opening or the second - removal - end of the base plate, which means that the last empty container has been removed from the base plate, no more filled containers can be inserted into the storage device. In such a case the cabinet is full or a second storage device has to be used as will be explained further below.

Pursuant to the second aspect of present invention the object is solved by a cabinet for storing goods, in particular a hazardous goods cabinet for storing hazardous goods containers, said cabinet comprising a cabinet housing which borders an interior space, whereby at least one storage device for storing the goods is placed or formed inside the interior space, said storage device comprising a base plate for parking the goods, whereby for the purpose of inserting goods into said storage device the base plate of said storage device comprises a first end being an insertion end, said first end cooperating with an insertion opening being formed in the cabinet housing, in particular a cabinet according to the first aspect of the present invention. The cabinet is characterized in that the base plate of said storage device comprises a second end being a removal end and being spaced from said first end, said second end cooperating with a removal opening being formed in the cabinet housing for the purpose of removing goods from said storage device, that the storage device comprises a blocking device, said blocking device being provided in such a manner that it is capable of preventing a removal of a good being parked on the base plate of the storage device from said storage device in an activated mode and of allowing a removal of a good being parked on the base plate of the storage device from said storage device in a deactivated mode.

According to the second aspect of the invention a cabinet for storing goods, in particular a hazardous goods cabinet for storing hazardous goods containers, is provided said cabinet comprising a cabinet housing which borders an interior space, whereby at least one storage device for storing the goods is placed or formed inside the interior space, said storage device comprising a base plate for parking the goods, whereby for the purpose of inserting goods into said storage device the base plate of said storage device comprises a first - insertion - end, said first end cooperating with an insertion opening being formed in the cabinet housing, and whereby the base plate of said storage device comprises a second - removal - end being spaced from said first end, said second end cooperating with a removal opening being formed in the cabinet housing for the purpose of removing goods from said storage device. With regard to these features the cabinet according to the second aspect is configured in accordance with the cabinet according to the first aspect of the invention. Furthermore, as a preferred embodiment, the cabinet according to the second aspect may comprise all features of the cabinet according to the first aspect. Therefore, the disclosure of the first aspect applies with respect to the disclosure in entirety also to the cabinet according to the second aspect according to the invention, so that all of the statements made with respect to first aspect of the invention also apply to their full extent to the second aspect of the invention, and vice versa.

According to the second aspect, the storage device comprises a blocking device. In particular a blocking device is a device which obstructs something by placing obstacles in the way. According to the present invention a blocking device in particular is a device that obstructs goods being stored in the storage device of the cabinet from being removed from the storage device, in particular by means of at least one member, which functions as an obstacle for the goods. In particular, said blocking device is provided in such a manner that it is capable of preventing a removal of a good being parked on the base plate of the storage device from said storage device in an activated mode and of allowing a removal of a good being parked on the base plate of the storage device from said storage device in a deactivated mode.

According to a preferred embodiment, the blocking device, which is part of the storage device and which is therefore mounted inside the cabinet housing, is provided in such a manner that it is capable of preventing the removal of a good, for example a container, in particular an empty container from the removal opening unless another good, for example a container, in particular a filled container is inserted through the insertion opening. Furthermore, the blocking device is provided in such a manner that it is adapted for preventing that any good which has been inserted into the storage device can be removed from the cabinet once it has been placed inside the cabinet.

The general function of such a blocking device will now be explained by reference of a specific embodiment, in which the cabinet is used for storing filled containers as well as empty containers. When a filled container gets inserted into the storage device inside the cabinet housing through the insertion opening, which is formed in the wall of the cabinet housing, the blocking device gets switched into the deactivated mode, which means that an empty container will be released and can be removed from the cabinet through the removal opening which is formed in the wall of the cabinet housing at the same time.

The present invention is not restricted to specific types of blocking devices. In general, any kind of blocking device can be used which is adapted for performing the function as described further above. Preferred embodiments of a blocking device are described in more detail further below.

The activation and deactivation of the blocking device can be achieved by means of a trigger signal, which for example is caused by operating a locking device described further below. Pursuant to another embodiment the activation and deactivation of the blocking device can be achieved by means of a good, in particular by means of a container, which gets inserted into the cabinet. In such a case, the good directly cooperates with the blocking device. For example, the good, for example the container, may have a portion, a lid for example, said portion having a member or being formed in a way that it can directly interact with the blocking device, by means of a protrusion for example.

According to a preferred embodiment, the blocking device is provided as a lever system. In a preferred embodiment the lever system can be a spring-loaded lever system or a gravity-loaded lever system.

Preferably, the lever system comprises two lever elements which are mounted spaced apart from each other. However, both lever elements are coupled to one another, which is realized by means of a coupling device. The present invention is not limited to specific types of coupling devices. In a preferred embodiment the coupling device can be provided as a coupling rod or the like.

In relation to the base plate, a first part of the blocking device, a first lever element for example, is arranged in said storage device in the region or in the vicinity of said insertion end. Furthermore, in relation to said base plate, a second part of the blocking device, a second lever element for example, is arranged in said storage device in the region or in the vicinity of said removal end. Preferably the second part of the blocking device can be movably arranged at said storage device. In particular this movement can be realized in accordance with the movement of the divider device. In such a case the second part of the blocking device can be moved into the direction of the removal opening of the cabinet wall and/or the removal end of the base plate of the storage device. According to this embodiment it is advantageously provided that the second part of the blocking device is movably coupled to the first part of the blocking device, by means of a telescopic connection, in particular a spring-loaded telescopic connection for example. In this case the second part of the blocking device can be moved by means of insertion of goods via the insertion opening, until the second part of the blocking device reaches and abuts the cabinet wall at the removal side which is the side where the removal opening is provided.

Preferably, both parts of the blocking device, both lever elements for example, delimit a space in which goods, for example containers, can be stored or parked. When the cabinet is used for storing filled containers as well as empty containers at the same time, both lever elements delimit a space in which empty containers as well as filled containers can be stored at the same time. In such a case a divider device as described further above can be used in order to separate the filled containers from the empty containers. In such a case the divider device, as seen from the direction of the insertion opening and the removal opening, is spatially provided in said storage device inside the blocking device, in particular inside the lever system between the lever elements. That means that the divider device is encompassed by the blocking device or by parts of the blocking device, by the lever elements for example.

When using an aforementioned lever system as a blocking system, the insertion of a filled container may deactivate the lever system, which means that the lever elements are moved into a position which allows to insert a filled container into the storages device via the insertion opening and, at the same time, which allows to remove an empty container from the storage device via the removal opening. Due to the fact that both lever elements are coupled with one another, the movement of the first lever element automatically causes a similar movement of the second lever element. In the deactivated mode, in which the first lever element has been moved into a position in which a filled container can be inserted into the storage device, the second lever element has been brought into a position in which an empty container can be moved beneath said second lever element and then removed from the storage device.

When the last empty container has been removed from the base plate of the storage device and when a divider device as mentioned further above is used, according to a preferred embodiment, the divider device contacts the side wall of the cabinet in the area of the removal opening as explained further above with regard to the second aspect of the present invention. According to a different embodiment, the divider device contacts the second lever element and is stopped by the second lever element. In both cases, no more filled containers can be inserted into the storage device.

If a filled container has been successfully inserted into the storage device the lever system gets activated again, such that neither an empty container, nor a filled container can be removed from the storage device. For the latter case the first lever element preferably has a very specific shape. According to a preferred embodiment, the first lever element comprises an edge being inclined to the horizontal line, and that in particular the first lever element is connected with a first side to the coupling device and comprising said edge being inclined to the horizontal line at a second side, said second side being spaced, in particular being opposite, to said first side.

Preferably, the second lever element, which might serve as a stop-plate for a divider device, comprises a contact surface for goods or for a divider device, said contact surface in particular running parallel to the vertical line. This contact surface can work or serves as a stop-device that secures that it is not possible to insert more filled containers if there are no more empty containers available on the base plate of the storage device.

According to a preferred embodiment, the cabinet comprises a first closing device which is adapted for closing the insertion opening. Furthermore, the cabinet comprises a second closing device which is adapted for closing the removal opening. Such closing devices will now be explained in more detail.

In general, the present invention is not limited to any specific type of closing device. It is the general function of such closing device that the insertion and removal openings can be closed and therefore locked. According to a preferred embodiment, such closing devices can be provided as a door or as a flap, which is mounted, in particular pivotally mounted or swivel mounted, on the side walls respectively.

According to a preferred embodiment, which can be defined as a further aspect of the invention as well, the cabinet comprises a cabinet housing which borders an interior space, whereby at least one storage device for storing the goods is placed or formed inside the interior space, said storage device comprising a base plate for parking the goods, whereby for the purpose of inserting goods into said storage device the base plate of said storage device comprises a first end being an insertion end, said first end cooperating with an insertion opening being formed in the cabinet housing. Furthermore, the base plate of said storage device comprises a second end being a removal end and being spaced from said first end, said second end cooperating with a removal opening being formed in the cabinet housing for the purpose of removing goods from said storage device. The cabinet housing comprises a front wall, a rear wall, a first side wall and a second side wall, whereby the base plate of said storage device extends between both side walls, whereby the insertion opening is formed in the first side wall and the removal opening is formed in the second side wall, whereby a closing device for closing the insertion opening, in particular a flap or a door, is provided on the first side wall, and whereby a closing device for closing the removal opening, in particular a flap or a door, is provided on the second side wall.

The cabinet housing preferably comprises a front wall, a rear wall, a first side wall and a second side wall, said side walls extending between the front wall and the rear wall. According to a preferred embodiment the cabinet housing has a quadrangular shape. In a very preferred embodiment the cabinet housing has a rectangular shape, whereby the front wall and the rear wall are broad sides of the cabinet and the side walls are narrow sides of the cabinet, respectively.

In this embodiment, the base plate of the storage device extends between both side walls, whereby the insertion opening is formed in the first side wall and the removal opening is formed in the second side wall. Therefore, the base plate extends between the insertion opening and the removal opening as well.

In order to avoid any unauthorized removal of goods, in particular of containers, which are parked or placed on the base plate of the storage device inside the interior space of the storage device, a closing device for closing the insertion opening is provided on/at the first side wall. And a closing device for closing the removal opening is provided on/at the second side wall.

The general function of such a cabinet having such closing devices is as follows: For inserting a good, for example a container, into the cabinet the closing device, which closes the insertion opening, is activated such that the insertion opening is released. For example, the door or flap closing the insertion opening gets switched or swung open. The good to be stored, the container for example, can be inserted and parked on the base plate of the storage device. At the opposite side wall, which incorporates the removal opening, the stored good, the stored container for example, can be removed. For this purpose, the closing device, which closes the removal opening, is released. For example, the door or flap closing the removal opening gets switched or swung open. The stored good, the stored container for example, can now be removed from the base plate of the storage device. Once the good has been inserted or removed the closing device is activated again such that the insertion or removal opening gets closed again. For example, the door or flap gets switched or swung closed again.

In particular, according to this embodiment, the cabinet is equipped with side doors on the left side and on the right side, by means of which goods, for example containers, are inserted at one side, the right side for example, Furthermore, goods, for example containers are removed at the other side, the left side for example. However, the present invention is not limited to specific sides where the insertion and removal of goods takes place.

According to a preferred embodiment at least one additional opening is provided in the cabinet housing.

According to a preferred embodiment, which comprises a cabinet housing having a front wall a rear wall and two side walls, the additional opening is formed in the front wall and/or in the rear wall, said opening being closed by means of a closing device, in particular by means of a flap or a door. In an alternative embodiment, the front wall and/or the rear wall is arranged as an additional opening, said opening being closed by means of a closing device, in particular by means of a flap or a door. According to these embodiments the cabinet housing is preferably equipped with one or two front door(s) or flap(s) and/or one or two rear door(s) or flap(s), which are pivotally mounted or swivel mounted at the cabinet housing. By means of the at least one additional opening it is easily possible for the operator of the cabinet to insert or remove a greater number of goods, for example containers, inside the cabinet housing on the base plate of the storage device, in particular if the cabinet housing comprises more than one storage device as described in more detail further below.

When the cabinet comprises such an additional opening, the operator of the cabinet can use this additional opening, in the front wall and/or in the rear wall for example, whilst the regular users of the cabinet use the insertion opening, in the first side wall for example, to insert their goods into the cabinet and use the removal opening, in the second side wall for example, to remove their goods In such a case the surface area of the additional opening in the front wall and/or in the rear wall is a multiple of the surface areas of the insertion opening and the removal opening in the side walls.

In order to avoid any unauthorized removal of goods from the cabinet, the closing devices for closing the insertion opening and/or the removal opening and/or the at least one additional opening preferably comprise a locking device. The present invention is not limited to specific types of locking devices. The locking device has the general function that, when activated, it is not possible that the closed opening can get released, for example that the door or flap gets opened. According to preferred embodiments, the locking device can be provided as a door lock and/or as a magnetic device and/or as a screw device. A door lock, which may use a key, a code card reader, a keyboard for inserting a pin or the like, makes sure that the locked door can be used and opened by an authorized person only. For example the locking device being a magnetic device can comprise one or more magnets, preferably two magnets. Such magnets can be mounted on the side wall and on the closing device and can be used to make sure that the closing devices, the doors or flaps for example, are not opening and closing in the wind. For example, by use of a screw device as a locking device it is possible to mount one or more screws through a small opening or a lock through the closing device to prevent vandalism of the cabinet, if necessary, for example during the new year's eve. By using such screw devices, it is not possible to insert fireworks or the like into the cabinet. According to preferred embodiments, different types of locking devices can be used at the same time.

According to yet another preferred embodiment, the closing device for closing the insertion opening comprises a positioning element, in particular a block element or a profile element, on a surface being directed into the interior space of said cabinet housing, said positioning element being provided in such a manner that it is capable of positioning an inserted container inside the storage device. This positioning element makes sure that an inserted good, an inserted container for example, will be correctly placed in the cabinet, in particular on the base plate of the storage device.

According to yet another preferred embodiment, the closing device for closing the removal opening comprises a retaining device on a surface being directed into the interior space of said cabinet housing or the closing device is provided as such a retaining element, said retaining device being provided in such a manner that it is capable of retaining an inserted container inside the storage device until the closing device has been completely opened. According to this embodiment, the closing device for closing the removal opening comprises a retaining device, or the closing device for closing the removal opening is adapted for performing the function of a retaining device. The retaining device, which can be provided as a retaining profile element for example, has the general function that a good, a container for example, which is stored inside the cabinet housing, cannot fall on the ground during the removal procedure from the cabinet housing. With regard to the stored good, a stored container for example, the retaining device generates some kind of a clamp function or a wedge function, which holds and retains the stored good inside the cabinet housing until the closing device has been completely and well-controlled opened.

According to the present invention as described in the different aspects the cabinet comprises at least one storage device, However, the present invention is not limited to a specific number of storage devices, which are mounted or provided inside the storage device, In a preferred embodiment, two or more storage devices for storing containers are provided or formed inside the interior space of the cabinet housing, in particular adjacent to one another, for example on top of each other, whereby each of the storage devices comprises a base plate for parking the goods, whereby, for the purpose of inserting containers, each base plate of each storage device comprises a first - insertion - end, said first end cooperating with the insertion opening being formed in the cabinet housing. According to one preferred embodiment, one single insertion opening for all of the storage devices is formed in said cabinet housing.

According to another preferred embodiment, one individual insertion opening for each storage device is formed in said cabinet housing. Each base plate of each storage device comprises a second - removal - end being spaced from said first insertion end, said second removal end cooperating with the removal opening being formed in the cabinet housing for the purpose of removing goods from the storage device, According to a preferred embodiment, one single removal opening for all of the storage devices is formed in the cabinet housing. According to another preferred embodiment, one individual removal opening for each storage device is formed in said cabinet housing.

In particular, each insertion opening and each removal opening comprises a closing device, in particular a flap or a door. With this respect full reference is made to the respective description of closing devices further above.

According to different preferred embodiments, the divider device and/or the blocking device of the storage device is/are arranged at the base plate of the storage device and/or at a rack and/or at a base plate of an adjacent storage device and/or at a lid element of the cabinet housing, said lid element upwardly bordering the interior space of the cabinet housing.

According to yet another preferred embodiment, at least one guiding element, in particular a guiding rail, for guiding inserted containers inside the cabinet housing is provided on at least one surface of the cabinet housing, said surface being an inner surface directed to the interior space of the cabinet housing. In particular such guiding rails can be mounted on the inner surface of a front wall and/or of a rear wall of the cabinet housing. Such guiding elements help to ensure that the goods, in particular the containers inside the cabinet housing are kept upright and do not fall over on the base plates. Preferably the guiding element has the same alignment as the base plate(s) of the storage device(s).

In a preferred embodiment a fastening device, in particular one or two fastening rails, for fastening the cabinet to a wall is provided on at least one outwardly directed outer surface of said cabinet housing, in particular on the rear wall of the cabinet housing. By means of such a fastening device it is possible to hang up and to mount the cabinet onto a wall. Furthermore, the fastening devices fix a correct distance to the wall, making it possible to operate any closing devices, for example doors or flaps; mounted to the side walls.

According to another preferred embodiment, one or more foot elements, which are in particular adjustable and/or movable, are provided on at least one outwardly directed outer surface of said cabinet housing, in particular on the bottom of the cabinet housing. So it is possible to make accurate settings of the cabinet on the floor.

Preferred is a cabinet which incorporates features that have been freely chosen from a combination of more than one of the aspects of the present invention.

Pursuant to the third aspect of present invention the object is solved by a system for storing containers, in particular for storing hazardous goods containers. The system comprises a cabinet in accordance with anyone of the aspects of the invention as described further above, either taken alone or in any random combination. Therefore, the disclosure of the different aspects apply with respect to the disclosure in entirety also to the system according to the invention, so that all of the statements made with respect to one or more aspect(s) of the invention also apply to their full extent to the system according to the fourth aspect of the invention, and vice versa. Furthermore, the system comprises a number of containers, said containers being adapted for being stored, in particular for being temporarily stored, inside said cabinet.

The present invention is not limited to a specific number of storage devices or to a specific number of goods or containers being stored therein. Furthermore, the container sizes, shapes and geometries can vary with respect to the dimensions of the cabinet. Furthermore, the present invention is not delimited to a specific direction in which the goods are to be inserted into the cabinet. Furthermore, the present invention is adapted for storing different sizes of goods, different sized containers for example. According to a preferred embodiment, if the cabinet comprises two or more storage devices according to the present invention, each storage device can be provided for storing different sized goods.

For a better understanding of the present invention, a preferred embodiment of the present invention will now be described by way of an example with reference to the accompanying drawings, in which
- Figures 1 to 8: depict different views of a system for storing containers according to the present invention including a cabinet for storing containers and a number of containers being stored therein;
- Figure 9: depicts a detail of the cabinet according to the invention explaining the function of a blocking device; and
- Figure 10: depicts a detail of the cabinet according to the invention explaining the function of the divider device.

In the drawings, a system 100 for storing containers 50 is provided. The system 100 is used as a hazardous goods system for storing hazardous goods containers, which means that the containers are filled with hazardous goods.

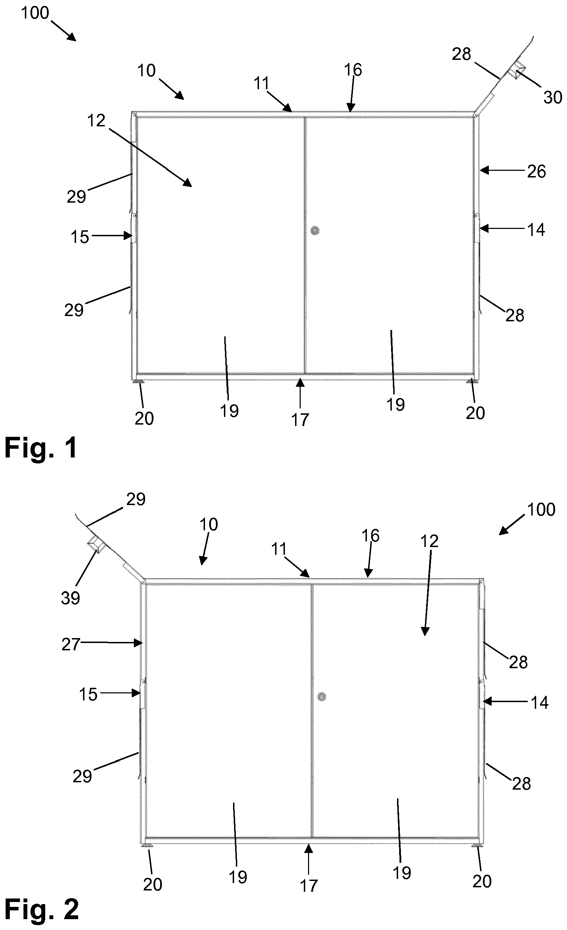

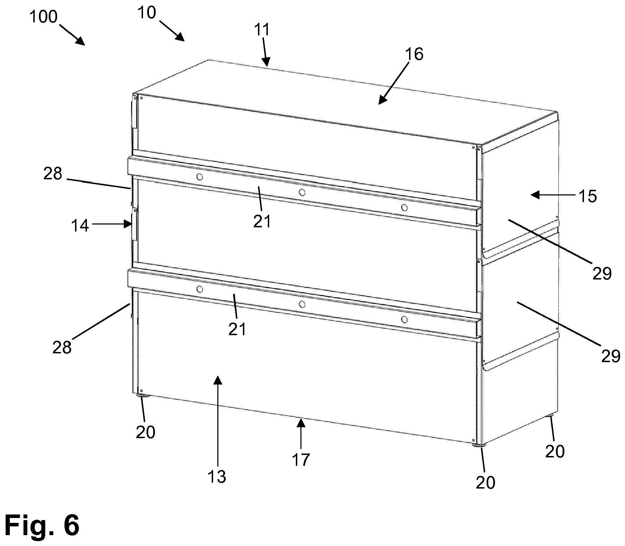

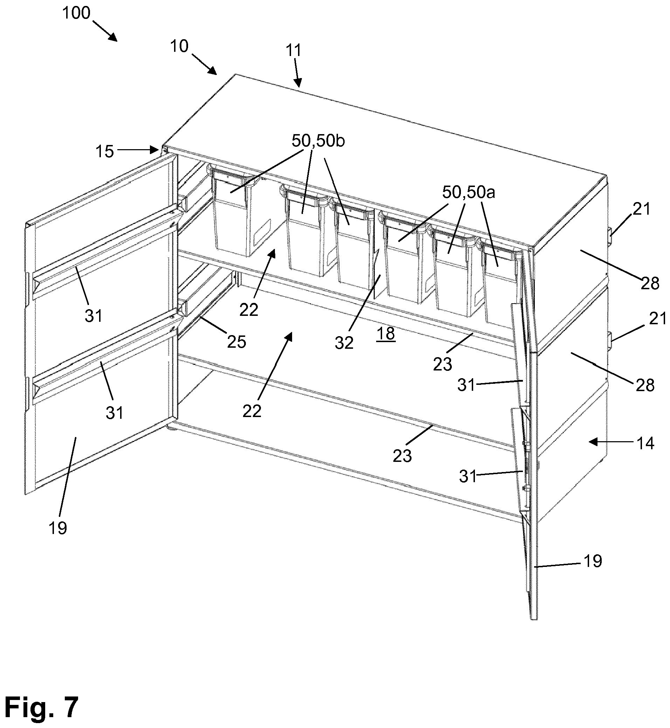

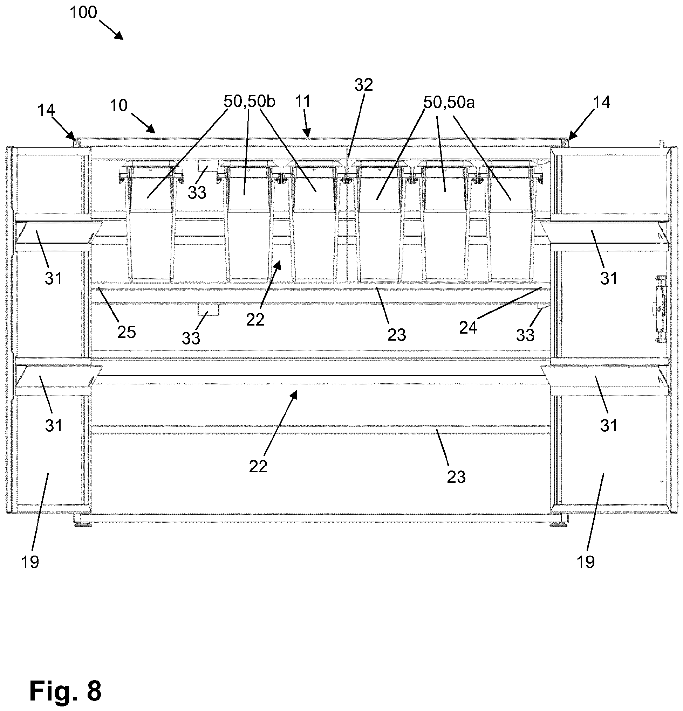

As depicted in Figures 1, 2, 6, 7 and 8, the system 100 comprises a cabinet 10, said cabinet 10 comprising a cabinet housing 11 for storing containers 50. The cabinet housing 11 has a rectangular shape including a front wall 12, a rear wall 13, a first side wall 14, a second side wall 15, a lid element 16 and a bottom 17. The different wall elements border an interior space 18. The front wall 12 comprises an opening which is closed by a closing device, said closing device being provided as two front doors 19.

On the rear wall 13, two fastening rails 21 are provided. By means of these fastening rails 21 it is possible to mount the cabinet 10 onto a wall. Furthermore, the fastening rails 21 fix a correct distance to the wall. On the bottom 17 of cabinet 10, at its corners, four foot elements 20 are provided to make accurate settings of the cabinet 10 on a floor.

Inside the interior space 18 the cabinet 10 comprises two storage devices 22 which are mounted adjacent to each other inside the cabinet housing 11. Each storage device 22 comprises a base plate 23 on which containers 50 can be parked or placed. Each base plate 23 comprises an insertion end 24 and a removal end 25 being opposite thereto. The base plates 23 extend between the side walls 14, 15 of the cabinet housing 11.

Inside the first side wall 14 two insertion openings 26 are provided, one insertion opening 26 for each storage device 22. Each insertion opening 26 is closed by a closing device, a flap 28 in the present case, said flap 28 being pivotally mounted on the first side wall 14. Inside the second side wall 15, two removal openings 27 are provided, one removal opening 27 for each storage device 22. Each removal opening 27 is closed by a closing device, a flap 29 in the present case, said flap 29 being pivotally mounted on the second side wall 15. The insertion openings 26 in the first side wall 14 correspond with the first insertion ends 24 of base plates 23. The removal openings 27 in the second side wall 15 correspond with the removal ends 25 of base plates 23.

On a surface being directed into the interior space 18 of the cabinet housing 11 of each flap 28 being mounted on the first side wall 14 an being used for closing the insertion opening 26, a positioning element 30, in particular a block element is mounted. This positioning element 30 makes sure that an inserted container 50 will be correctly placed on the base plate 23 of the storage device 22. On a surface being directed into the interior space 18 of the cabinet housing 11 of each flap 29 being mounted on the second side wall 15 and being used for closing the removal opening 27, a retaining device 39, in particular a retaining profile element, is provided. The retaining device 39 has the general function that a good, a container for example, which is stored inside the cabinet housing 11, cannot fall on the ground until the flap 29 has been completely and well-controlled opened.

According to the described embodiment, the cabinet 10 is provided for storing filled containers 50a and empty containers 50b at the same time. Filled containers 50a can be inserted at one side, the right side for example. Empty containers 50b can be removed or taken from the cabinet 10 at the opposite side, the left side for example.

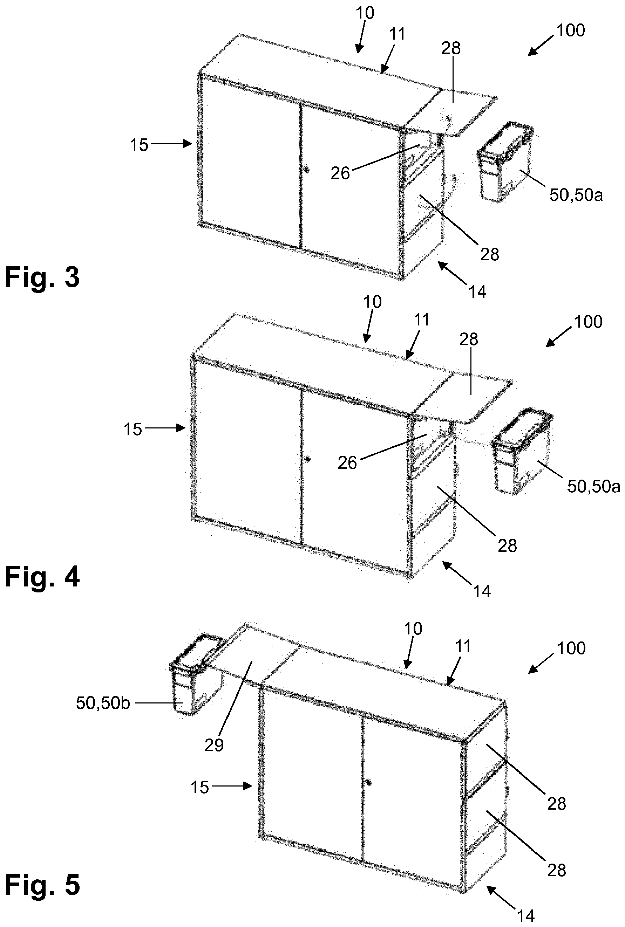

The general function of such a cabinet 10 is depicted in Figure 3 to 5 and can be described as follows:
For inserting a container 50, a filled container 50a in the present case, into the cabinet 10 the flap 28, which closes the insertion opening 26, is activated such that the insertion opening 26 is released. For example, the flap 28 closing the insertion opening 26 gets swung open. The filled container 50a can be inserted into the cabinet housing 11 and can be stored on the base plate of the storage device. At the opposite second side wall 15, which incorporates the removal opening 27, a stored container 50, an empty container 50b in the present case can be removed. For this purpose, the flap 29, which closes the removal opening 27, gets swung open. The stored container 50b can now be removed from cabinet housing 11, in particular the base plate of the storage device. Once the containers 50a, 50b have been inserted or removed the insertion and removal openings 26, 27 get closed again.

In order to ensure that the containers 50, 50a, 50b are kept upright inside the cabinet housing 11 and do not fall over in the base plates 23, a number of guiding elements 31, in particular guiding rails are mounted on inner surfaces being directed into the interior space 18 of the cabinet housing 11 at the front doors 19 as well as at the rear wall 13.

In order to make sure that filled containers 50a and empty containers 50b can be stored on the base plate 23 at the same time, each storage device 22 comprises a divider device 32, a divider plate in the present embodiment. The divider device 32 is provided in such a manner that the area between the divider device 32 and the insertion end 24 of the base plate 23 forms a first storage area for the uptake of filled containers 50a, and that the area between said divider device 32 and the removal end 25 of the base plate 23 forms a second storage area for the uptake of empty containers 50b.

The divider device 32, in relation to base plate 23, is movably mounted in said storage device 22, for example by means of a guiding rail. That means that the divider device 32 can be moved between a position which is defined by the insertion end 24 of the base plate 23 and a position which is defined by the removal end 25 of the base plate 23.

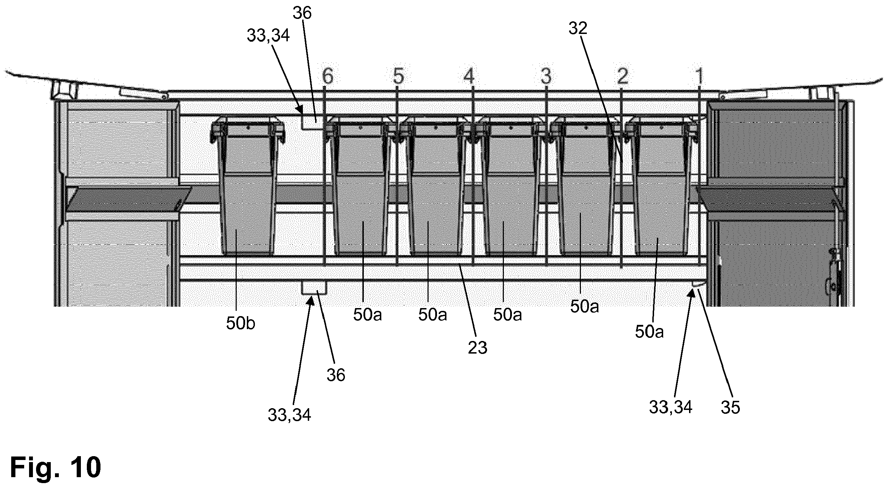

The function of this divider device 32 will now be explained with regard to Figure 10. At the beginning the storage device 22 inside the cabinet housing 11 of cabinet 10 is filled with empty containers 50b only. At this point, the divider device 32 is located in the region or at the insertion opening 26 formed in the first side wall 14 of the cabinet housing 11 in the region of the insertion end 24 of the base plate 23. This is depicted as position 1 in Figure 10. When a first filled container 50a gets inserted into the storage device 20, the divider device 32 is moved in the direction of the removal opening 27 formed in the second side wall 15 of the cabinet housing 11 in the region of the removal end 25 of base plate 23. At the same time an empty container 50b can be removed from the base plate 23 of the storage device 22 via said removal opening 27. This is depicted as positions 2, 3, 4 and 5 in Figure 10. If the divider device 32 is moved, by means of further inserting filled containers 50a, into an end-position, which means that the last empty container 50b has been removed from the base plate 23, no more filled containers 50a can be inserted into the storage device 22. In such a case the cabinet 10 is full or a second storage device 22 has to be used.

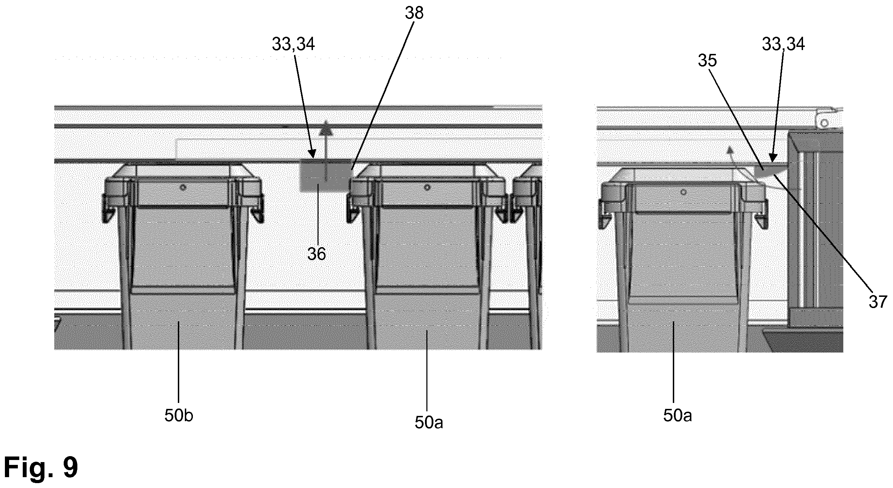

According to a preferred embodiment the divider device 22 can abut at the second side wall 15 of the cabinet housing 11. According to a different preferred embodiment, when the divider device 32 has reached its final position, position 6 for example, it may come into contact with a blocking device 33 which will now be described with regard to Figure 9.

The blocking device 33 is part of the storage device 22 and is therefore mounted inside the cabinet housing 11. It is the general function of this blocking device 33, that it prevents the removal of an empty container 50b from the removal opening 27 unless a filled container 50a is inserted through the insertion opening 26. In addition, the blocking device 33 is provided in such a manner that it is adapted for preventing that any filled container 50a which has been inserted into the storage device 22 can be removed from the cabinet 10 once it has been placed inside the cabinet 10.

For this purpose, the blocking device 33 is provided as a lever system 34, said lever system 34 comprising a first lever element 35 and a second lever element 36. Both lever elements 35, 36 are mounted spaced apart from each other. However, both lever elements 35, 36 are coupled to one another by means of a coupling rod.

In relation to the base plate 23 of storage device 22, the first lever element 35 is arranged in the region or in the vicinity of the insertion end 25. The second lever element 36 is arranged in said storage device 22 in the region or in the vicinity of the removal end 25 of base plate 23. Therefore, both lever elements 35, 36 delimit a space in which containers 50 can be stored or parked. When the cabinet 10 is used for storing filled containers 50a as well as empty containers 50b at the same time, both lever elements 35, 36 delimit a space in which empty containers 50b as well as filled containers 50a can be stored at the same time. In such a case the divider device 3 separates the filled containers 50a from the empty containers 50b. In such a case the divider device 32, as seen from the direction of the insertion opening 25 and the removal opening 27, may be spatially provided inside the lever system 34 between the lever elements 35, 36. That means that the divider device 32 may be encompassed by the blocking device 33.

When using the lever system 34 as a blocking system 33, the insertion of a filled container 50a may deactivate the lever system 34, which means that the lever elements 35, 36 are moved into a position which allows to insert a filled container 50a into the storages device 22 via the insertion opening 26 and, at the same time, which allows to remove an empty container 50b from the storage device 22 via the removal opening 27. Due to the fact that both lever elements 35, 36 are coupled with one another, the movement of the first lever element 35 automatically causes a similar movement of the second lever element 36. In the deactivated mode, in which the first lever element 35 has been moved into a position in which a filled container 50a can be inserted into the storage device 22, the second lever element 36 has been brought into a position in which an empty container 50b can be moved beneath said second lever element 36 and then removed from the storage device 22.

If the last empty container 50b has been removed from the base plate 23 of the storage device 22, the divider device 32 contacts the inner surface of side wall 15 and is stopped when it reaches side wall 15, or, according to a different embodiment, the divider device 32 contacts the second lever element 36 and is stopped by the second lever element 36. In both cases, no more filled containers 50a can be inserted into the storage device 22 and no more containers can be removed from the storage device 22.

If a filled container 50a has been successfully inserted into the storage device 22 the lever system 34 gets activated again, such that neither an empty container 50b, nor a filled container 50a can be removed from the storage device 22. For this reason, the first lever element 35 comprises an edge 37 being inclined to the horizontal line. The first lever element 35 is connected with a first side to the coupling device and comprises said edge 37 being inclined to the horizontal line at a second side, said second side being spaced, in particular being opposite, to said first side.

The second lever element 36 serves as a stop-plate for the divider device 32 and comprises a contact surface 38 for containers 50 and for the divider device 32, said contact surface 38 running parallel to the vertical line. This contact surface 38 serves as a stop-device that secures that it is not possible to insert more filled containers 50a if there are no more empty containers 50b available on the base plate 23 of the storage device 22, since the movement of the divider device 32 is stopped by the contact surface 38 of second lever element 36.

### List of Reference Numerals

- 10: Cabinet for storing containers
- 11: Cabinet housing
- 12: Front wall
- 13: Rear wall
- 14: First side wall
- 15: Second side wall
- 16: Lid element
- 17: Bottom
- 18: Interior space
- 19: Front door (closing device)
- 20: Foot element
- 21: Fastening rail
- 22: Storage device
- 23: Base plate
- 24: First end (insertion end)
- 25: Second end (removal end)
- 26: Insertion opening
- 27: Removal opening
- 28: Flap (closing device)
- 29: Flap (closing device)
- 30: Positioning element
- 31: Guiding element
- 32: Divider device
- 33: Blocking device
- 34: Lever system
- 35: First lever element
- 36: Second lever element
- 37: Inclined edge of the first lever element
- 38: Contact surface of the second lever element
- 39: Retaining device

- 50: Container
- 50a: Filled container
- 50b: Empty container

- 100: System for storing containers

## Claims

1. A cabinet (10) for storing goods, in particular a hazardous goods cabinet for storing hazardous goods containers (50), said cabinet (10) comprising a cabinet housing (11) which borders an interior space (18), whereby at least one storage device (22) for storing the goods is placed or formed inside the interior space (18), said storage device (22) comprising a base plate (23) for parking the goods, whereby for the purpose of inserting goods into said storage device (22) the base plate (23) of said storage device (22) comprises a first end (24) being an insertion end, said first end (24) cooperating with an insertion opening (26) being formed in the cabinet housing (11), **characterized in that** the base plate (23) of said storage (23) device comprises a second end (25) being a removal end and being spaced from said first end (24), said second end (25) cooperating with a removal opening (27) being formed in the cabinet housing (11) for the purpose of removing goods from said storage device (22), that the storage device (22) comprises a divider device (32), in particular a divider plate or a divider face or a divider profile element, said divider device (32), in relation to said base plate (23), being movably mounted in said storage device (22), and that the divider device (32) is provided in such a manner that the area between said divider device (32) and the first end (24) forms a first storage area for the uptake of a first type of goods and that the area between said divider device (32) and the second end (25) forms a second storage area for the uptake of a second type of goods.

2. The cabinet according to claim 1, further **characterized in that** the storage device (32) comprises a groove or a guiding rail for moving the divider device (32).

3. A cabinet (10) for storing goods, in particular a hazardous goods cabinet for storing hazardous goods containers (50), said cabinet (10) comprising a cabinet housing (11) which borders an interior space (18), whereby at least one storage device (22) for storing the goods is placed or formed inside the interior space (18), said storage device (22) comprising a base plate (23) for parking the goods, whereby for the purpose of inserting goods into said storage device (22) the base plate (23) of said storage device (22) comprises a first end (24) being an insertion end, said first end (24) cooperating with an insertion opening (26) being formed in the cabinet housing (11), in particular a cabinet (10) according to anyone of claims 1 or 2, **characterized in that** the base plate (23) of said storage device (22) comprises a second end (25) being a removal end and being spaced from said first end (24), said second removal end (25) cooperating with a removal opening (27) being formed in the cabinet housing (11) for the purpose of removing goods from said storage device (22), that the storage device (22) comprises a blocking device (33), said blocking device (33) being provided in such a manner that it is capable of preventing a removal of a good being parked on the base plate (23) of the storage device (22) from said storage device (22) in an activated mode and of allowing a removal of a good being parked on the base plate (23) of the storage device (22) from said storage device (22) in a deactivated mode.

4. The cabinet according to claim 3, further **characterized in that** the blocking device (33) is provided as a lever system (34), in particular as a spring-loaded or as a gravity-loaded lever system, said lever system (34) comprising two lever elements (35, 36) being spaced from one another, said lever elements (35, 36) being coupled to each other by means of a coupling device, in particular by means of a coupling rod, that, in relation to said base plate (23), a first lever element (35) is arranged in said storage device (22) in the region or in the vicinity of said insertion end (24) and that, in relation to said base plate (23), a second lever element (36) is arranged in said storage device (22) in the region or in the vicinity of said removal end (25).

5. The cabinet according to claim 4, further **characterized in that** the first lever element (35) comprises an edge (37) being inclined to the horizontal line, and that in particular the first lever element (35) is connected with a first side to the coupling device and comprising said edge (37) being inclined to the horizontal line at a second side, said second side being spaced, in particular being opposite, to said first side, and/or that the second lever element (36) comprises a contact surface (38) for goods or for a divider device (32), said contact surface (38) in particular running parallel to the vertical line.

6. The cabinet according to anyone of the claims 3 to 5, as dependent to one of claims 1 or 2, further **characterized in that** the divider device (32), as seen from the direction of the insertion opening (26) and the removal opening (27), is spatially provided in said storage device (22) inside the blocking device (33), in particular inside the lever system (34) between the lever elements (35, 36).

7. The cabinet according to anyone of claims 1 to 6, further **characterized in that** a first closing device is provided, which is adapted for closing the insertion opening (26) and that a second closing device is provided which is adapted for closing the removal opening (27).

8. The cabinet according to anyone of claims 1 to 7, further **characterized in that** two or more storage devices (22) for storing goods are provided or formed inside the interior space (18) of the cabinet housing (11), in particular adjacent to each other, that each of the storage devices (22) comprises a base plate (23) for parking the goods, that, for the purpose of inserting goods, each base plate (23) of each storage device (22) comprises a first end (24) being the insertion end, said first end (24) cooperating with the insertion opening (26) being formed in the cabinet housing (11), that one single insertion opening for all of the storage devices (22) or that one individual insertion opening (26) for each storage device (22) being formed in said cabinet housing (11), that each base plate (23) of each storage device (22) comprises a second end (25) being the removal end and being spaced from said first insertion end (24), said second removal end (25) cooperating with the removal opening (27) being formed in the cabinet housing (11) for the purpose of removing goods from the storage device (22), that one single removal opening for all of the storage devices (22) or that one individual removal opening (27) for each storage device (22) being formed in said cabinet housing (11), and that in particular each insertion opening (26) and each removal opening (27) comprises a closing device, in particular a flap (28, 29) or a door.

9. The cabinet according to anyone of claims 1 to 8, further **characterized in that** the divider device (32) of the storage device (32) is arranged at the base plate (23) of the storage device (22) and/or at a rack and/or at a base plate (23) of an adjacent storage device (22) and/or at a lid element (16) of the cabinet housing (22), said lid element (16) upwardly bordering the interior space (18) of the cabinet housing (11).

10. The cabinet according to anyone of claims 3 to 9, further **characterized in that** the blocking device (33) of the storage device (32) is arranged at the base plate (23) of the storage device (22) and/or at a rack and/or at a base plate (23) of an adjacent storage device (22) and/or at a lid element (16) of the cabinet housing (22), said lid element (16) upwardly bordering the interior space (18) of the cabinet housing (11).

11. The cabinet according to anyone of claims 1 to 10, further **characterized in that** at least one guiding element (31), in particular a guiding rail, for guiding inserted goods inside the cabinet housing (11) is provided on at least one surface of the cabinet housing (11), said surface being an inner surface directed to the interior space (18) of the cabinet housing (11).

12. The cabinet according to anyone of claims 1 to 11, further **characterized in that** a fastening device, in particular a fastening rail (21), for fastening the cabinet (10) to a wall is provided on at least one outwardly directed outer surface of said cabinet housing (11).

13. The cabinet according to anyone of claims 1 to 12, further **characterized in that** one or more foot elements (20), which are in particular adjustable and/or movable, are provided on at least one outwardly directed outer surface of said cabinet housing (11).

14. A system (100) for storing containers (50), in particular for storing hazardous goods containers, said system (100) comprising a cabinet (10) according to anyone of claims 1 to 13, and a number of containers (50), said containers (50) being adapted for being stored, in particular for being temporarily stored, inside said cabinet (10).
